# EUROPÄISCHE PATENTANMELDUNG

(11) **EP 0 666 678 A1**
(43) Veröffentlichungstag der Anmeldung: **09.08.1995**
(21) Anmeldenummer: 95100739.2
(22) Anmeldetag: 20.01.1995
(51) Int. Cl.: H04M 3/18

(54) **Schutzschaltung für eine Teilnehmeranschlussschaltung sowie Teilnehmeranschlussschaltung damit**

(30) Priorität: 28.01.1994 DE 4402461
(71) Anmelder: Alcatel SEL Aktiengesellschaft, D-70435 Stuttgart (DE)
(72) Erfinder: Dreier, Benno, D-70825 Münchingen (DE)
(74) Vertreter: Brose, Gerhard

(57) **Zusammenfassung**

- **Stand der Technik:**: Schutzschaltung mit einer Schwellwertschaltung zum Abführen von Überspannungen gegen Masse und einem niederohmigen Widerstand teilnehmerseitig in einer Leitungsader.
- **Technisches Problem:**: Erhöhte Anforderungen an den Blitzschutz
- **Grundgedanke:**: Spannungsbegrenzendes Bauelement (V1, V2) wird parallel zum niederohmigen Widerstand (R1, R2) geschaltet.
- **Lösung:**: Zu jedem der seriellen niederohmigen Speise- oder Fühlerwiderstände wird parallel ein Varistor geschaltet.
- **Vorteile:**: - Symmetrieanforderungen erfüllt
- Geringe Spannungsanforderungen an niederohmige Widerstände und
vorgeschaltete parallele Bauelemente - Spannungsbegrenzende Bauelemente billig
- Kostenersparnis
- **Nachteile:**: - Höhere Anforderungen an Schwellwertschaltung

## Beschreibung

Die Erfindung betrifft eine Schutzschaltung nach dem Oberbegriff von Anspruch 1 und eine Teilnehmeranschlußschaltung nach dem Oberbegriff von Anspruch 3.

Die Erfindung geht von einer Schutzschaltung für den Überspannungsschutz einer Teilnehmeranschlußschaltung aus, wie sie in der Europäischen Patentschrift EP 0242562 B1 beschrieben ist.

Bei Teilnehmeranschlußschaltungen werden im Allgemeinen Schutzschaltungen benötigt, um spannungsempfindliche Bauteile oder Baugruppen vor Überspannungen zu schützen. Solche Überspannungen werden oft durch atmosphärische Entladungen oder durch magnetische Einkopplungen von Stromleitungen verursacht und haben impulsförmigen oder sinusförmigen Charakter.

Bei der Europäischen Patentschrift EP 0242562 B1 ist teilnehmerseitig vor dem zu schützenden Teil der Teilnehmeranschlußschaltung eine Schutzschaltung eingefügt, die für jede Leitungsader aus einem Widerstand von 50 Ω und einer Thyristordiode als schwellwertbehaftetes Schaltelement besteht. Die Schutzschaltung ist für beide Leitungsadern symmetrisch aufgebaut. Die Thyristordiode führt Überspannungen gegen Masse ab. Der Widerstand ist teilnehmerseitig vor der Thyristordiode in die Leitungsader eingefügt und dient u.a. zur Strombegrenzung im Überspannungsfall.

Eine solche Schutzschaltung hat einen bestimmten Blitzschutz zu bieten, der wie folgt simuliert wird: Eine Überspannungsquelle mit einem bestimmten Innenwiderstand und einer bestimmten eingeprägten impuls- oder sinusförmigen Überspannung wird für eine bestimmte Zeitdauer an die Teilnehmerschaltung angelegt. Die Teilnehmerschaltung darf dadurch nicht geschädigt werden.

Wird nun die Anforderung an den Blitzschutz, insbesonders an die Höhe der Überspannung, erhöht, so ergeben sich bei der obigen Schutzschaltung Probleme. Aufgrund der hohen Anforderungen an die Widerstandssymmetrie bei Teilnehmeranschlußschaltungen sind die beiden Widerstände meist auf einem Hydrid in Dickschichttechnik realisiert und werden mittels eines Lasers abgeglichen. Dadurch ist die Spannungsfestigkeit dieser Widerstände sehr begrenzt und kann nur durch aufwendige Technik erhöht werden.

Als Lösungsansatz für dieses Problem wird in Fachkreisen auch diskutiert, in jeder Leitungsader einen PTC in Serie zu dem Widerstand einzufügen. Solche PTC's sind jedoch relativ teuer und es ergeben sich Probleme mit der Widerstandssymmetrie.

Es ist nun die Aufgabe der Erfindung, eine Schutzschaltung und eine Teilnehmeranschlußschaltung anzugeben, die erhöhten Anforderungen an den Blitzschutz gerecht werden.

Diese Aufgabe wird gelöst durch eine Schutzschaltung nach der Lehre von Anspruch 1 und eine Teilnehmeranschlußschaltung nach der Lehre von Anspruch 3.

Es ist der Grundgedanke der Erfindung, ein spannungsbegrenzendes Bauelement parallel zum Widerstand der Schutzschaltung zu schalten. Ein solches Bauelement ist im Normalfall hochohmig und im Überspannungsfall niederohmig. Dadurch verringert sich der Gesamtwiderstand des Widerstandes und des spannungsbegrenzenden Bauelementes im Überspannungsfall. Ein höherer Anteil der Überspannung fällt am Leitungswiderstand der Teilnehmeranschlußleitung ab und die Spannungsanforderungen für den Widerstand verringern sich so. Die Stromanforderungen für die Schwellwertschaltung, z.B. für die Thyristordiode, erhöhen sich zwar, liegen jedoch meist noch im zulässigen Bereich oder können aufgrund der Art der verwendeten Bauelemente mit geringem Kostenaufwand erfüllt werden.

Eine vorteilhafte Ausgestaltung der Erfindung ist dem Unteranspruch zu entnehmen.

Ein Vorteil der Erfindung ist, daß keine hohen Anforderungen an die Symmetrie der spannungsbegrenzenden Bauelemente gestellt werden muß, da diese im Normalfall im hochohmigen Zustand sind und so nicht ins Gewicht fallen. Auch sind z.B. Varistoren, die als spannungsbegrenzende Bauelemente eingesetzt werden können, billige Standartbauelemente. Ein weiterer Vorteil ist, daß die Spannungsfestigkeit von vorgeschalteten Bauelementen, z.B. Kondensatoren für die Herausfilterung von hochfrequenten Störungen, nicht erhöht zu werden braucht, sondern sogar verringert werden kann. Dasselbe gilt für den Widerstand. Dadurch ergibt sich ebenfalls eine Kostenersparnis.

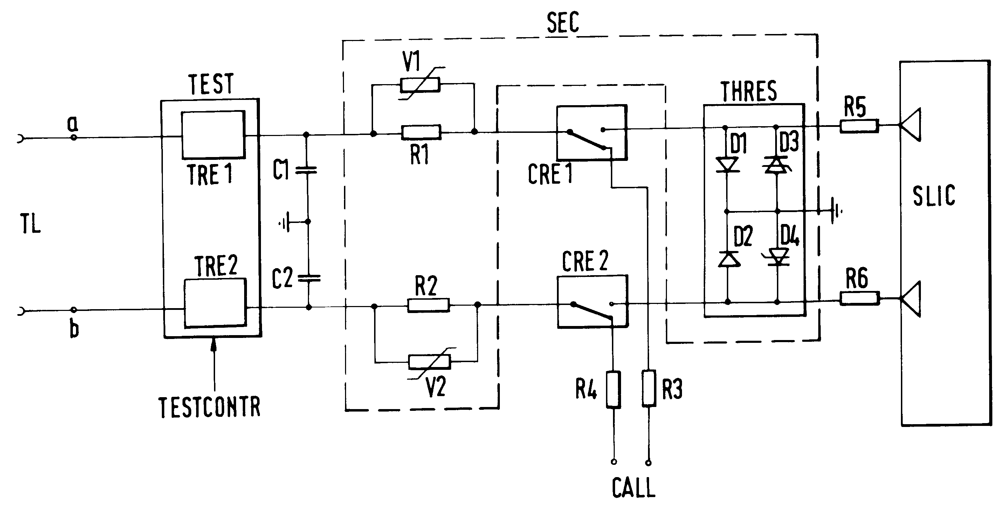

Im folgenden wird die Erfindung anhand eines Ausführungsbeispiels unter Zuhilfenahme der beiliegenden Zeichnung erläutert.

Die Figur zeigt einen Ausschnitt aus einem Blockschaltbild einer erfindungsgemäßen Teilnehmeranschlußschaltung mit einer erfindungsgemäßen Schutzschaltung.

Die Figur weist zwei Anschlußpunkte a und b, eine Teilnehmeranschlußleitung TL, eine Testeinrichtung TEST, zwei Kondensatoren C1 und C2, sechs Widerstände R1 bis R6, zwei Varistoren V1 und V2, zwei Rufrelais CRE1 und CRE2, eine Schwellwertschaltung THRES und einen integrierten Schaltkreis SLIC auf.

Teilnehmerseitig sind die beiden Anschlußpunkte a und b mit der Teilnehmeranschlußleitung TL verbunden. Vermittlungsseitig ist der Anschlußpunkt a über die Testeinrichtung TEST, den Widerstand R1, das Rufrelais CRE1, die Schwellwertschaltung THRES und den Widerstand R5 und der Anschlußpunkt b über die Testeinrichtung TEST, den Widerstand R2, das Rufrelais CRE2, die Schwellwertschaltung THRES und den Widerstand R6 mit dem integrierten Schaltkreis SLIC verbunden. Der Leitungszweig zwischen der Testeinrichtung TEST und dem Widerstand R1 ist über den Kondensator C1 und der Leitungszweig zwischen der Testeinrichtung TEST und dem Widerstand R2 über den Kondensator C2 mit Masse verbunden. Den Widerständen R1 und R2 ist jeweils der Varistor V1 bzw. V2 parallel geschaltet. Die beiden Leitungszweige zwischen dem Anschlußpunkt a und dem integrierten Schaltkreis SLIC und dem Anschlußpunkt b und dem integrierten Schaltkreis SLIC sind so symmetrisch beschaltet.

Die Testeinrichtung TEST weist zwei Testrelais TRE1 und TRE2 auf, die jeweils in den Leitungszweig zwischen dem Anschlußpunkt a und dem Widerstand R1 bzw. zwischen dem Anschlußpunkt b und dem Widerstand R2 eingefügt sind. Die beiden Testrelais TRE1 und TRE2 gestatten die galvanische Verbindung mit zwei Prüfbussen, mittels derer eine Wartungseinrichtung unmittelbar die Teilnehmeranschlußleitung TL erreichen kann, um die verschiedenen Wartungsfunktionen auszuführen. Die Stellung der Testrelais TRE1 und TRE2 wird vom Test-Steuersignal TESTCONTR gesteuert.

Die beiden Kondensatoren C1 und C2 dienen dazu, hochfrequente Störungen abzufangen.

Die Widerstände R1 und R2 werden auch als Speise- oder Fühlerwiderstände bezeichnet und dienen der Strombegrenzung. Es ist aber auch möglich, daß die an ihnen abfallende Spannung abgegriffen wird und als Information für weitere, hier nicht ausgeführte Steuer- und Regelungsaufgaben dient.

Bei Teilnehmeranschlußschaltungen bestehen hohe Anforderungen in Bezug auf die Widerstandsymmetrie der beiden Leitungsadern. Aus diesem Grund ist es notwendig, daß die beiden Widerstände R1 und R2 mit hoher Genauigkeit denselben Wert haben. Die beiden Widerstände R1 und R2 haben hier, ohne Einschränkung der Allgemeinheit, einen Wert von 50 Ω und sind auf einem Hydrid in Dickschichttechnik realisiert. Mittels eines Lasers wurden sie mit hoher Genauigkeit auf denselben Wert abgeglichen.

Die beiden Varistoren V1 und V2 haben die Eigenschaft, bei Anliegen einer niedrigen Spannung sehr hochohmig zu sein und bei Überschreitung einer bestimmten Schwellspannung schnell sehr niederohmig zu werden. Anstelle von Varistoren können hier auch andere spannungsbegrenzende Bauelemente verwendet werden. Solche Bauelemente sind z.B. Diac, Zenerdiode, oder Thyristordiode.

Mittels der beiden Rufrelais CRE1 und CRE2 erfolgt die Einspeisung eines Rufes CALL. Der Ruf CALL wird dabei über die Widerstände R3 und R4, deren Wert jeweils 300 Ω beträgt, in die Teilnehmeranschlußleitung TL eingekoppelt.

Es ist auch möglich, daß die Rufeinkopplung oder die Testeinrichtung TEST anders aufgebaut ist. Insbesondere können an Stelle von Relais MOSFET-Schalter verwendet werden.

Die Schwellwertschaltung THRES besteht aus zwei Dioden D1 und D2 und aus zwei Thyristordioden D3 und D4. Die Anoden der beiden Dioden D1 und D2 und die Kathoden der beiden Thyristordioden D3 und D4 sind jeweils mit Masse verbunden. Die Kathode der Diode D1 und die Anode der Thyristordiode D3 sind mit dem Leitungszweig zwischen dem Rufrelais CRE1 und dem Widerstand R5 verbunden. Die Kathode der Diode D2 und die Anode der Thyristordiode D4 sind mit dem Leitungszweig zwischen dem Rufrelais CRE2 und dem Widerstand R6 verbunden. So ergibt sich eine Schwellwertschaltung mit bidirektionalen Eigenschaften. Die beiden Dioden D1 und D2 leiten positive Spannungen gegen Masse ab. Dies ist notwendig da das Potential auf den Leitungsadern einer Teilnehmeranschlußleitung im Normalfall negativ ist und so ein positives Potential auf Überspannungen zurückzuführen ist. Die beiden Thyristordioden gehen bei Überschreiten einer bestimmten negativen Schwellwertspannung sehr schnell von einem hochohmigen in einen niederohmigen Zustand über und leiten so Überspannungen gegen Masse ab. Die Schwellwertspannung wird dabei so gewählt, daß der nachfolgende integrierte Schaltkreis SLIC durch sie nicht zerstört wird.

Es ist auch möglich, die Schwellwertschaltung THRES anders als in der Figur gezeigt aufzubauen. Die Schwellwertschaltung THRES könnte z.B. aus zwei Zenerdioden bestehen. Der Schutzpegel könnte auch adaptiv verändert werden. Hierfür könnten z.B. Thyristoren eingesetzt werden.

Die Widerstände R5 und R6 haben jeweils einen Wert von 10 Ω.

Es ist auch möglich, daß die Widerstände R5 und R6 oder die Kondensatoren C1 und C2 entfallen oder ihre Funktion durch andere Bauelemente oder Schaltungsanordnungen ersetzt wird.

Bei dem integrierten Schaltkreis SLIC handelt es sich um einen hochintegrierten Kundenschaltkreisen, der weitere Funktionen einer Teilnehmeranschlußschaltung durchführt. Der integrierte Schaltkreis ESLIC wird durch Überspannungen leicht zerstört und stellt hier beispielhaft den zu schützenden Teil der Teilnehmeranschlußschaltung dar.

Die beiden Widerstände R1 und R2, die beiden Varistoren V1 und V2 und die Schwellwertschaltung THRES bilden eine Schutzschaltung SEC.

Bei Normalbetrieb ergibt sich nun folgende Funktionsweise der Schutzschaltung SEC. Die Varistoren V1 und V2 befinden sich im hochohmigen Zustand und die Testrelais TRE1 und TRE2 und die Rufrelais CRE1 und CRE2 sind durchgeschaltet. Die Schwellwertschaltung THRES befindet sich ebenfalls im hochohmigen Zustand. Damit werden die Strompfade von den Anschlußpunkten a und b zu dem integrierten Schaltkreis SLIC durch die Widerstände R1 und R5 bzw. durch die Widerstände R2 und R6 bestimmt.

Erfolgt die Einkopplung des Rufes CALL, so wird der Strompfad durch die Widerstände R1 und R3 bzw. R2 und R4 bestimmt. Es ist hierbei notwendig, die Schwellspannung der Varistoren V1 und V2 derart zu wählen, daß sich die Varistoren V1 und V2 bei der maximalen Rufspannung immer noch im hochohmigen Zustand befinden.

Wenn nun z.B. ein hoher Überspannungsimpuls den Anschlußpunkt a erreicht, so schaltet die Schwellwertschaltung THRES durch und leitet den Überspannungsimpuls auf Masse ab. Dadurch wird verhindert, daß der Überspannungsimpuls an den integrierten Schaltkreis SLIC gelangt und diesen zerstört. Zusätzlich zu der Schwellwertschaltung THRES geht auch der Varistor V1 in den niederohmigen Zustand über. Dadurch wird der Gesamtwiderstand der beiden parallel geschalteten Bauelemente, des Widerstand R1 und des Varistors V1, verringert. Der Leitungswiderstand der an den Anschlußpunkt a angeschlossenen Leitungsader der Teilnehmeranschlußleitung TL, der als Innenwiderstand der Überspannungsquelle betrachtet werden kann, bleibt jedoch gleich. Dadurch verringert sich der Anteil der Überspannung, der am Widerstand R1 und damit auch am Kondensator C1 abfällt. Durch den parallel geschalteten Varistor V1 werden folglich die Spannungsanforderungen an den Widerstand R1 und an den Kondensator C1 verringert. Durch die Verringerung des Gesamtwiderstandes der beiden Bauelemente, des Widerstands R1 und des Varistors V1, im Überspannungsfall, steigt jedoch die Strombelastung der Schwellwertschaltung THRES an. Sie bleibt aber immer noch in dem Bereich, der für die dort verwendeten Bauelemente zulässig ist.

Für einen Überspannungsimpuls an dem Anschlußpunkt b ergibt sich wegen der Symmetrie entsprechendes.

Es ist auch möglich, daß die Schutzschaltung SEC an anderer Stelle in die Teilnehmeranschlußschaltung eingefügt ist. So kann z.B. die Schwellwertschaltung THRES teilnehmerseitig von der Rufeinkopplung (Rufrelais CRE1 und CRE2) oder teilnehmerseitig von der Testeinrichtung TEST zwischen die Leitungszweige eingefügt sein, die die Anschlußpunkte a bzw. b mit dem integrierten Schaltkreis ESLIC verbinden. Es ist hierbei jedoch zu beachten, daß die Widerstände R1 und R2 und die parallel geschalteten Varistoren V1 und V2 teilnehmerseitig zur Schwellwertschaltung THRES in die entsprechenden Leitungszweige eingefügt werden.

Es ist auch möglich, die Test- oder Rufeinkopplungsfunktionen durch andere Mittel als durch die Testeinrichtung TEST bzw. die Rufrelais CRE1 und CRE2 zu realisieren.

## Patentansprüche

1. Schutzschaltung (SEC) für eine Teilnehmeranschlußschaltung, die mit einer Teilnehmeranschlußleitung (TL) verbunden ist, mit einem niederohmigen Widerstand (R1, R2) und einer Schwellwertschaltung (THRES) zum Abführen von Überspannungen auf einen Erdpotential führenden Leitungspunkt, wobei der niederohmige Widerstand (R1, R2) in Reihe in einen Leitungszweig eingefügt ist, der eine Leitungsader der Teilnehmeranschlußleitung (TL) mit dem zu schützenden Teil (SLIC) der Teilnehmeranschlußschaltung verbindet und die Schwellwertschaltung (THRES) mit einem zwischen dem niederohmigen Widerstand (R1, R2) und dem zu schützenden Teil (SLIC) der Teilnehmeranschlußschaltung gelegenen Anschlußpunkt auf diesem Leitungszweig verbunden ist**, dadurch gekennzeichnet,** daß ein spannungsbegrenzendes Bauelement (V1, V2) parallel zu dem niederohmigen Widerstand (R1, R2) geschaltet ist.

2. Schutzschaltung nach Anspruch 1, dadurch gekennzeichnet, daß das spannungsbegrenzende Bauelement (V1, V2) ein Varistor ist.

3. Teilnehmeranschlußschaltung mit einem Anschluß (a, b) an eine Teilnehmeranschlußleitung (TL) und mit einer Schutzschaltung (SEC), die mit einem niederohmigen Widerstand (R1, R2) und einer Schwellwertschaltung (THRES) zum Abführen von Überspannungen auf einen Erdpotential führenden Leitungspunkt versehen ist, wobei der niederohmige Widerstand (R1, R2) in Reihe in einen Leitungszweig eingefügt ist, der eine Leitungsader der Teilnehmeranschlußleitung (TL) mit dem zu schützenden Teil (SLIC) der Teilnehmeranschlußschaltung verbindet und die Schwellwertschaltung (THRES) mit einem zwischen dem niederohmigen Widerstand (R1, R2) und dem zu schützenden Teil (SLIC) der Teilnehmeranschlußschaltung gelegenen Anschlußpunkt auf diesem Leitungszweig verbunden ist, **dadurch gekennzeichnet,** daß ein spannungsbegrenzendes Bauelement (V1, V2) parallel zu dem niederohmigen Widerstand (R1, R2) geschaltet ist.
